# EUROPÄISCHE PATENTSCHRIFT

(11) **EP 1 010 601 B1**
(45) Veröffentlichungstag und Bekanntmachung des Hinweises auf die Patenterteilung: **06.10.2004**
(21) Anmeldenummer: 99123460.0
(22) Anmeldetag: 25.11.1999
(51) Int. Cl.: B61L 15/00, H04L 12/66, B60L 15/42

(54) **Datenkommunikationssystem im Zug mit Masterbus**
Train data communication system with master bus
Système de communication de données dans un train avec bus maître

(30) Priorität: 08.12.1998 DE 19856539
(43) Veröffentlichungstag der Anmeldung: 21.06.2000
(73) Patentinhaber: DB Cargo AG, 55116 Mainz (DE)
(72) Erfinder: Gralla, Dietmar, Dr., 32425 Minden (Westf) (DE); Witte, Stefan, Dr., 32425 Minden (Westf) (DE); Heinz, Sebastian, 32423 Minden (Westf) (DE)

(56) Entgegenhaltungen:
- EP-A- 0 300 350
- WO-A-91/01231
- WO-A-93/18952
- WO-A-98/43392
- DE-U- 29 521 037
- PATENT ABSTRACTS OF JAPAN vol. 009, no. 209 (M-407), 27. August 1985 (1985-08-27) & JP 60 070901 A (MITSUBISHI DENKI KK), 22. April 1985 (1985-04-22)

## Beschreibung

Die Erfindung betrifft ein Datenkommunikationssystem im Zug, mit einem Zugbus zur Kommunikation zwischen Fahrzeugen des Zuges und jedem Fahrzeug zugeordneten Fahrzeugbussystemen, die über jeweils ein Gateway an den Zugbus angekoppelt sind, wobei von wenigstens einem Fahrzeug eine Master-Funktion zur Steuerung im Zug übernehmbar ist.

Aus WO 91/01231 A ist ein Zug bekannt, bei dem eine gesamte interne Kommunikation innerhalb eines Fahrzeuges sowie zwischen mehreren Fahrzeugen über einen gemeinsamen Zugbus durchgeführt wird.

Desweiteren sind insbesondere aus WO98/43392 Datenkommunikationssysteme der gattungsgemäßen Art mit einem Zugbus und einem Fahrzeugbus bekannt. Bei diesen erfolgt eine Datenkommunikation einerseits über einen Zugbus zwischen den Fahrzeugen des Zuges. Andererseits erfolgt eine Datenkommunikation innerhalb eines Fahrzeuges über einen Fahrzeugbus. Zur Datenkommunikation zwischen Systemkomponenten mehrerer Fahrzeuge sind die jeweiligen Fahrzeugbussysteme über Gateways mit dem Zugbus verbunden.

Voraussetzung für eine Datenkommunikation zwischen den einzelnen Fahrzeugen innerhalb des Zuges ist eine Initialisierung des Datenkommunikationssystems. Hierbei werden den einzelnen Gateways (Fahrzeugen) durch eine sogenannte Zugtaufe eindeutige feste Adressierungen zugeordnet. Diese Adressierung ist zwingende Voraussetzung für eine fahrzeugindividuelle Datenkommunikation innerhalb des Zuges.

Um diese Initialisierung und eine spätere Steuerung der Datenkommunikation durchführen zu können, ist es erforderlich, einem Fahrzeug des Zuges - in der Regel einem Triebfahrzeug - eine Master-Funktion zuzuordnen. Alle weiteren Fahrzeuge des Zuges erhalten eine Slave-Funktion. Master-Funktionen werden hierbei von Systemkomponenten des Zuges übernommen, die aus Vorgaben eines Triebfahrzeugführers, eines automatischen Steuerungssystems oder dergleichen Befehle für einzelne Subsysteme des Zuges, wie beispielsweise Antrieb, verteilter Antrieb, Bremse oder dergleichen, generieren. Dies sind sogenannte primär stellwerterzeugende Systemkomponenten. Slave-Funktionen werden von den Systemkomponenten des Zuges übernommen, die diese Befehle umsetzen. Dies sind sogenannte stellwertumsetzende Systemkomponenten.

Bei Fahrzeugen, die sowohl Master-Funktionen als auch Slave-Funktionen übernehmen können, sind die jeweiligen Systemkomponenten über einen Fahrzeugbus und einen Gateway an den Zugbus gekoppelt. Hierbei ist nachteilig, daß über diesen Fahrzeugbus bidirektional die stellwerterzeugenden Signale von den die Master-Funktion übernehmenden Systemkomponenten und die Bestätigungs-, Überwachungs-, Status-, Istwert- und Diagnosesignale von den stellwertumsetzenden Systemkomponenten übertragen werden müssen. Entsprechend der auszutauschenden Datenmengen ergeben sich somit entsprechend einer begrenzten Übertragungskapazität der Fahrzeugbussysteme Zeitverzögerungen. Sowohl bei einer Initialisierung (Zugtaufe) als auch im Steuerungsbetrieb ergeben sich somit große Datenraten, die zu relativ langen Zykluszeiten für den Signalaustausch zwischen den stellwerterzeugenden und den stellwertumsetzenden Systemkomponenten führen können.

Der Erfindung liegt die Aufgabe zugrunde, ein Datenkommunikationssystem der gattungsgemäßen Art zu schaffen, bei dem in einfacher Weise eine Verringerung der Zykluszeiten zum Signalaustausch möglich ist.

Erfindungsgemäß wird diese Aufgabe durch ein Datenkommunikationssystem mit den im Anspruch 1 genannten Merkmalen gelöst. Innerhalb des wenigstens einen Fahrzeuges, über das eine Master-Funktion übernehmbar ist, ist wenigstens ein weiterer Fahrzeugbus als Master-Fahrzeugbus, über den ausschließlich primär stellwerterzeugende Systemkomponenten an den Zugbus koppelbar sind, angeordnet, der über ein Master-Gateway an den Zugbus gekoppelt ist. Dadurch wird in einfacher Weise eine Trennung der Übertragung der Signale der stellwerterzeugenden Systemkomponenten von den Signalen der stellwertumsetzenden Systemkomponenten über einen Fahrzeugbus möglich. Insbesondere wird somit eine Reduzierung einer Grundbelastung des nunmehr vorgesehenen Master-Fahrzeugbusses während der Initialisierung (Zugtaufe) des Datenkommunikationssystems und im Betrieb möglich.

Zusätzlich wird dadurch, daß der Master-Fahrzeugbus über ein eigenes Master-Gateway an den Zugbus gekoppelt ist, in vorteilhafter Weise möglich, den über den Zugbus abzuwickelnden Multiplexbetrieb der Übertragung der stellwerterzeugenden Signale und der entsprechenden Rückmeldungen der stellwertumsetzenden Systemkomponenten sicher in kurzen Zykluszeiten zu beherrschen. Das Master-Gateway muß nur noch die stellwerterzeugenden Signale in den Zugbus einkoppeln und die Rückmeldungen empfangen. Eine Einkopplung von Rückmeldungen in den Zugbus über das Master-Gateway entfällt.

Weitere bevorzugte Ausgestaltungen der Erfindung ergeben sich aus den übrigen, in Unteranspruch 2 genannten Merkmalen.

Die Erfindung wird nachfolgend in einem Ausführungsbeispiel anhand der zugehörigen Zeichnung, die schematisch eine Konfiguration eines Zuges zeigt, näher erläutert.

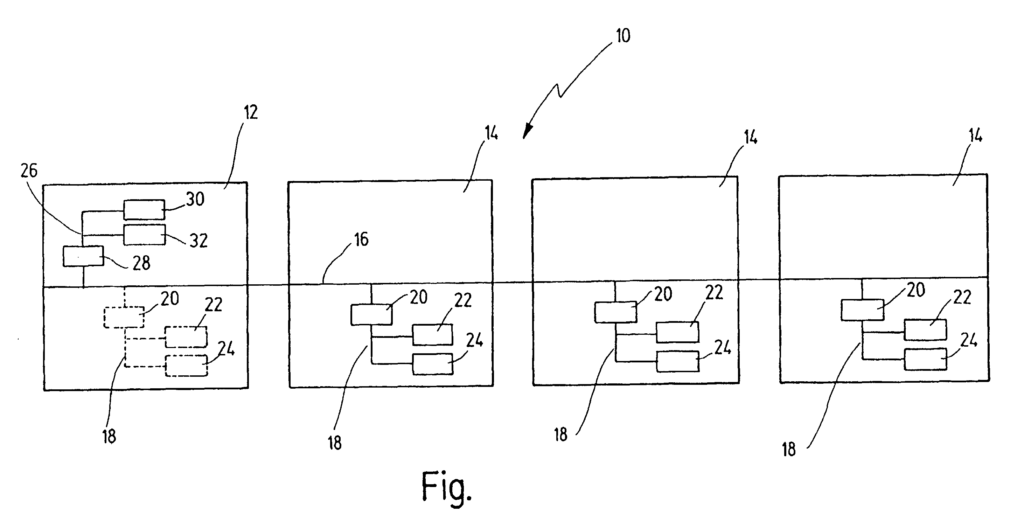

Die Figur zeigt schematisch einen Zug 10. Der Zug 10 umfaßt ein Triebfahrzeug 12 sowie drei Wagen 14 (nachfolgend Fahrzeuge 14). Nach weiteren, nicht dargestellten Ausführungsbeispielen kann die Konfiguration des Zuges 10 selbstverständlich auch anders gewählt sein. So können beispielsweise weniger oder mehr Wagen 14 oder mehr als ein Triebfahrzeug 12 im Zug 10 zusammengestellt sein.

Die Fahrzeuge 12 und 14 des Zuges 10 sind über einen Zugbus 16 miteinander verbunden. Der Zugbus 16 kann beispielsweise ein CAN-Bus, ein Funkbus oder dergleichen sein. Die Fahrzeuge 14 besitzen jeweils einen fahrzeuginternen Fahrzeugbus 18. Die Fahrzeugbussysteme 18 sind über Gateways 20 an den Zugbus 16 gekoppelt. An die Fahrzeugbussysteme 18 sind stellwertumsetzende Systemkomponenten 22 und 24 angeschlossen. Die Systemkomponenten 22 und 24 können beispielsweise Antriebseinrichtungen, Bremseinrichtungen oder dergleichen sein. Dies sind in jedem Fall Komponenten, die infolge empfangener Befehle Aktionen ausführen. Dies können auch Komponenten sein, die Informationen über Betriebszustände liefern.

Innerhalb des Triebfahrzeuges 12 ist ein Master-Fahrzeugbus 26 angeordnet, der über ein Master-Gateway 28 an den Zugbus 16 angekoppelt ist. Der Master-Fahrzeugbus 26 verbindet primär stellwerterzeugende Systemkomponenten 30 beziehungsweise 32 mit dem Zugbus 16. Die Systemkomponenten 30 und 32 sind in der Lage, aus Vorgaben eines Triebfahrzeugführers oder eines elektronischen Steuersystems Befehle zum Führen des Zuges 10 zu geben.

Innerhalb des Triebfahrzeuges 12 ist ferner ein Fahrzeugbus 18 dargestellt, der über ein Gateway 20 mit dem Zugbus 16 verbunden ist. Über diesen Fahrzeugbus 18 werden stellwertumsetzende Systemkomponenten 22 und 24 an den Zugbus 16 angekoppelt.

Anhand der Darstellung in der Figur wird deutlich, daß die stellwerterzeugenden Systemkomponenten 30 und 32 innerhalb des Zuges 10 über einen eigenen Master-Fahrzeugbus 26 an den Zugbus 16 gekoppelt sind. Der Master-Fahrzeugbus 26 braucht somit keine stellwertumsetzenden Systemkomponenten zu bedienen. Hierdurch läßt sich, insbesondere bei einer Initialisierung des Datenkommunikationssystems über den Master-Fahrzeugbus 26, die Zykluszeit der ausgetauschten Botschaften zwischen den einzelnen Systemkomponenten 30, 32 beziehungsweise 22, 24 des Zuges 10 verringern.

Nach einem weiteren, nicht dargestellten Ausführungsbeispiel kann vorgesehen sein, daß innerhalb des Triebfahrzeuges 12 auch zwei Master-Fahrzeugbussysteme 26 mit entsprechenden primär stellwerterzeugenden Systemkomponenten 30 und 32 vorhanden sind. Dies kann beispielsweise bei einem Triebfahrzeug mit zwei Führerständen der Fall sein.

## Patentansprüche

1. Datenkommunikationssystem im Zug, mit einem Zugbus zur Kommunikation zwischen Fahrzeugen des Zuges und mit jedem Fahrzeug zugeordneten internen Fahrzeugbussystemen, die über jeweils ein Gateway an den Zugbus gekoppelt sind, wobei von wenigstens einem Fahrzeug eine Master-Funktion zur Steuerung im Zug übernehmbar ist, **dadurch gekennzeichnet, daß** innerhalb des wenigstens einen Fahrzeugs (12), über das eine Master-Funktion übernehmbar ist, wenigstens ein weiterer Fahrzeugbus als Master-Fahrzeugbus (26) angeordnet ist, über den ausschließlich Systemkomponenten (30, 32) mit primär stellwerterzeugenden Funktionen an den Zugbus (16) koppelbar sind und der Master-Fahrzeugbus (26) über ein Master-Gateway (28) an den Zugbus (16) gekoppelt ist.

2. Datenkommunikationssystem nach Anspruch 1, **dadurch gekennzeichnet, daß** das wenigstens eine Fahrzeug (12) wenigstens einen zusätzlichen Fahrzeugbus (18) aufweist, über den stellwertumsetzende Systemkomponenten (22, 24) an den Zugbus (16) koppelbar sind.

## Claims

1. A data communication system for a train, with a train bus for communicating between individual vehicles of the train, and with internal vehicle bus systems that are assigned to each vehicle and respectively coupled to the train bus via a gateway, wherein at least one vehicle can take over a master control function in the train, **characterized in that** at least one additional vehicle bus in the form of a master vehicle bus (26) is arranged within the at least one vehicle (12) that can take over a master function, wherein the master vehicle bus only serves for coupling system components (30, 32) that generate primary control values to the train bus (16), and wherein the master vehicle bus (26) is coupled to the train bus (16) via a master gateway (28).

2. The data communication system according to Claim 1, **characterized in that** the at least one vehicle (12) contains at least one additional vehicle bus (18) for coupling system components (22, 24) that carry out adjustments in accordance with the control values to the train bus (16).

## Revendications

1. Système de communication de données dans un train, comportant un bus de train pour la communication entre les véhicules du train et des systèmes de bus de train internes associés à chaque véhicule et qui sont couplés respectivement par le biais d'une passerelle au bus de train, une fonction de maître pouvant être prise en charge par au moins un véhicule pour la commande dans le train, **caractérisé en ce qu'**à l'intérieur d'au moins un véhicule (12) qui peut prendre en charge une fonction maître est disposé en tant que bus de véhicule maître (26) au moins un autre bus de véhicule, par le biais duquel exclusivement des composants de système (30, 32) peuvent être couplés avec des fonctions de génération de manière primaire de valeurs de réglage au bus de train (16) et que le bus de véhicule maître (26) est couplé par le biais d'une passerelle maîtresse (28) au bus de train (16).

2. Système de communication de données selon la revendication 1, **caractérisé en ce qu'**au moins un véhicule (12) présente au moins un bus de véhicule supplémentaire (18) par le biais duquel des composants de système transposant les valeurs de réglage (22, 24) peuvent être couplés au bus de train (16).
